# EUROPEAN PATENT APPLICATION

(11) **EP 3 909 835 A1**
(43) Date of publication of application: **17.11.2021**
(21) Application number: 21164721.9
(22) Date of filing: 24.03.2021
(51) Int. Cl.: B62D 35/00

(54) **AIRFLOW DEFLECTOR FOR VEHICLE**

(30) Priority: 13.05.2020 JP 2020084391
(71) Applicant: MAZDA MOTOR CORPORATION, Hiroshima 730-8670 (JP)
(72) Inventor: Morikawa, Yosuke, Hiroshima, 730-8670 (JP); Nakata, Akihiro, Hiroshima, 730-8670 (JP); Okamoto, Satoshi, Hiroshima, 730-8670 (JP); Kawazu, Yuya, Hiroshima, 730-8670 (JP)
(74) Representative: von Tietzen und Hennig, Nikolaus

(57) **Abstract**

[Task] To provide an airflow deflector for a vehicle capable of suppressing aerodynamic drag caused by airflow into an open space.

[Solution] The airflow deflector for the vehicle includes: a cover member 6 that covers at least a part of a floor surface 2 on a vehicle front side of an open space; and at least one airflow deflector member 7 provided in a portion on a vehicle rear side of the cover member 6. The airflow deflector member 7 has: a slanted section 8 that is slanted in a manner to extend to a vehicle lower side as extending to the vehicle rear side; and an airflow deflector surface 9 that extends in a vehicle vertical direction from the slanted section 8 toward the cover member 6. An extending direction of a side 10 of the airflow deflector surface 9, which serves as a boundary between the airflow deflector surface 9 and a surface of the cover member 6, is oriented inward or outward in a vehicle width direction with a vehicle longitudinal direction being a reference. The airflow deflector surface 9 is tilted inward or outward in the vehicle width direction with respect to the surface of the cover member 6.

## Description

### [Technical Field]

The present invention relates to an airflow deflector for a vehicle.

### [Background Art]

Conventionally, a technique of improving aerodynamic drag has been known. In such a technique, an airflow deflector fin is provided to an exterior surface or a floor surface underneath a floor of a vehicle and is used to deflect airflow.

For example, an airflow deflector disclosed in Patent document 1 includes plural airflow deflector fins that are provided in front of tires under the vehicle floor in order to reduce airflow to outer sides in a vehicle width direction of the tires. A rear portion of each of the airflow deflector fins extends in a vehicle longitudinal direction and guides the airflow toward the tire.

### [Prior Art Documents]

### [Patent documents]

[Patent document 1] JP-A-2008-179217

### [Summary of the Invention]

### [Problem to be solved by the invention]

However, use of the airflow deflector as described above, which includes the airflow deflector fins to guide the airflow toward the tires, is insufficient to prevent airflow into large open spaces, such as a wheel house and a tunnel section of the vehicle, that are opened under the floor. As a result, the aerodynamic drag increases with the airflow into the open spaces, which is one of causes worsening fuel economy performance.

The present invention has been made in view of the above circumstance and therefore has a purpose of providing an airflow deflector for a vehicle capable of suppressing aerodynamic drag caused by airflow into an open space.

### [Means for solving the Problem]

In order to solve the above problem, an airflow deflector for a vehicle according to claim 1 of the present invention is an airflow deflector that is provided on a floor surface of a vehicle and deflects airflow in a vehicle longitudinal direction below the floor surface, and includes: a cover member that covers at least a part of the floor surface on a vehicle front side of an open space provided to the floor surface; and at least one airflow deflector member that is provided in a portion on a vehicle rear side of the cover member. The airflow deflector member has: a slanted section that is slanted to a vehicle lower side as extending to a vehicle rear side; and an airflow deflector surface that extends in a vehicle vertical direction from the slanted section toward the cover member. An extending direction of a side of the airflow deflector surface, which serves as a boundary between the airflow deflector surface and a surface of the cover member, is oriented inward or outward in a vehicle width direction with the vehicle longitudinal direction being a reference. The airflow deflector surface is tilted inward or outward in the vehicle width direction with respect to the surface of the cover member.

With such a configuration, during travel of the vehicle, the airflow toward the vehicle rear side at a position below the floor surface hits the airflow deflector member from the vehicle front side and produces a swirl at the time of moving over the slanted section, and the airflow deflector surface deflects the swirl into a spindly and continuous fashion. In this way, the spindly swirl toward the vehicle rear side can be produced below the floor surface. This swirl toward the vehicle rear side guides surrounding air in a manner to longitudinally cross an opening of the open space in the vehicle longitudinal direction. In this way, it is possible to prevent the airflow into the open space on the vehicle rear side of the cover member. As a result, it is possible to suppress aerodynamic drag caused by the airflow into the open space.

In the airflow deflector for the vehicle, the slanted section preferably extends in the vehicle longitudinal direction toward the open space in bottom view.

With such a configuration, the swirl, which is produced at the time when the air moves over the slanted section, moves in the vehicle longitudinal direction, and the airflow from the vehicle front side can move linearly with the swirl in the vehicle longitudinal direction toward the open space. As a result, it is possible to further improve an effect of suppressing the aerodynamic drag caused by the airflow into the open space.

In the airflow deflector for the vehicle, the plural airflow deflector members are preferably provided on the cover member, and the plural airflow deflector members are preferably arranged such that the extending directions of the sides of the airflow deflector surfaces and tilt directions of the airflow deflector surfaces with respect to the cover member are bilaterally symmetrical about the center position in the vehicle width direction of the vehicle.

With such a configuration, the plural airflow deflector members, which are arranged such that the extending directions of the sides of the airflow deflector surfaces and the tilt directions of the airflow deflector surfaces with respect to the cover member are bilaterally symmetrical about the center position in the vehicle width direction of the vehicle, produce the swirls by the airflow, which is directed differently between a right side and a left side of the center position in the vehicle width direction at the position below the floor surface, and adjust magnitudes of the swirls to be bilaterally even. In this way, it is possible to prevent the swirl in the small magnitude from being produced. As a result, it is possible to reliably prevent the airflow into the open space and further improve the effect of suppressing the aerodynamic drag caused by the airflow into the open space.

In the airflow deflector for the vehicle, in the bottom view of the vehicle, a slant angle of the side of the airflow deflector member with respect to the vehicle longitudinal direction is preferably set to be larger than 0 degree and equal to or smaller than 30 degrees.

With such a configuration, it is possible to produce the stable high-speed swirl by the airflow deflector member and to maintain a flow rate of such a swirl.

The slanted section may be slanted at a slanted (pitch) angle θp with respect to the surface of the cover member having a value between 0 degree and smaller than 60 degrees. A high speed stable swirl can be produced when the slant angle θp is approximately 30 degrees.

The airflow detector surface may be tilted inwardly or outwardly at a roll angle θr with respect to the surface of the cover member which is larger than 0 degree and equal to or smaller than 30 degrees. A high speed stable swirl can be produced when the roll angle θr is approximately 15 degrees.

The slanted section of the airflow deflector member causes the height of the airflow deflector member to increase in longitudinal direction of the vehicle form the vehicle front side to the vehicle rear side. The height of the airflow deflector member is preferably set to such a height that a spindly swirl capable of crossing at least a part of the open space can be produced. For instance, the height, i.e. the maximum distance between the slanted section and the surface of the cover member, may be set in a range between 2 mm to 8 mm.

The cover member and the plural airflow deflector members may be integrally formed of a resin.

The at least one airflow deflector member may have a right-angled triangular shape. Preferable, the slanted portion forms the hypotenuse and the side of the airflow deflector surface serving as a boundary between the airflow deflector surface and the surface of the cover member forms the ankathete. A pointed corner of the triangular shape faces the vehicle front side.

An airflow deflector for a vehicle according to claim 10 of the present invention is an airflow deflector that is provided on top of a front windshield of a vehicle and deflects airflow in a vehicle longitudinal direction above the front windshield, and includes: an exterior member that is provided at an upper end of the front windshield; and at least one airflow deflector member that is provided in a portion on a vehicle rear side of the exterior member. The airflow deflector member has: a slanted section that is slanted to a vehicle upper side as extending to a vehicle rear side; and an airflow deflector surface that extends in a vehicle vertical direction from the slanted section toward the exterior member. An extending direction of a side of the airflow deflector surface, which serves as a boundary between the airflow deflector surface and a surface of the exterior member, is oriented inward or outward in a vehicle width direction with the vehicle longitudinal direction being a reference. The airflow deflector surface is tilted inward or outward in the vehicle width direction with respect to the surface of the exterior member.

With such a configuration, during the travel of the vehicle, the airflow toward the vehicle rear side at a position above the front windshield hits the airflow deflector member, which is provided on the exterior member, from the vehicle front side and produces the swirl at the time of moving over the slanted section, and the airflow deflector surface deflects the swirl into the spindly and continuous fashion. In this way, the spindly swirl toward the vehicle rear side can be produced above the front windshield. This swirl toward the vehicle rear side guides the surrounding air in the manner to longitudinally cross an opening of the open space behind the front windshield in the vehicle longitudinal direction. In this way, it is possible to prevent the airflow into the open space on the vehicle rear side of the exterior member. As a result, it is also possible to suppress the aerodynamic drag caused by the airflow into the open space behind the front windshield.

The invention is also directed to a vehicle which at least one airflow deflector according to the invention. At least one airflow deflector may be provided on a floor surface of the vehicle wherein the open space is either a wheel house or a tunnel cover section. At least one airflow deflector may be provided on top of a front windshield of the vehicle.

### [Advantage of the invention]

According to the airflow deflector for the vehicle in the present invention, it is possible to prevent the airflow into the open space. As a result, it is possible to suppress the aerodynamic drag caused by the airflow into the open space.

### [Brief Description of the Drawings]

[Fig. 1] Fig. 1 is a perspective view illustrating a configuration in which an airflow deflector for a vehicle according to an embodiment of the present invention is attached to a floor surface of the vehicle in front of a front-side wheel house.
[Fig. 2] Fig. 2 is a perspective explanatory view that schematically illustrates an airflow deflector member of the airflow deflector in Fig. 1 and that explains a pitch angle of a slanted section, a yaw angle of a side of an airflow deflector surface, and a roll angle of the airflow deflector surface.
[Fig. 3] Fig. 3 is an enlarged perspective view of the airflow deflector member in Fig. 1 and peripheral components thereof.
[Fig. 4] In Fig. 4, (a) is a view in which the airflow deflector member in Fig. 3 is seen from front of the vehicle, (b) is a side view in which the airflow deflector member in Fig. 3 is seen from a side on which the airflow deflector surface is visible, and (c) is a view in which the airflow deflector member in Fig. 3 is seen from a vehicle lower side.
[Fig. 5] Fig. 5 is an explanatory view schematically illustrating a spindly swirl that is produced by the airflow deflector member in Fig. 1.
[Fig. 6] Fig. 6 is a schematic cross-sectional explanatory view for explaining a mechanism that prevents airflow into an open space by the spindly swirl produced by the airflow deflector member in Fig. 1.
[Fig. 7] Fig. 7 is a view in which bilaterally symmetrical arrangement of the plural airflow deflector members in Fig. 1 about a center position in a vehicle width direction of the vehicle is seen from a lower side of the vehicle.
[Fig. 8] Fig. 8 is a perspective view illustrating a configuration in which an airflow deflector for a vehicle according to a modified embodiment of the present invention is attached to a tunnel cover on a floor surface of the vehicle.
[Fig. 9] Fig. 9 is a side view of a vehicle in which an airflow deflector for a vehicle according to another modified embodiment of the present invention is provided at an upper end of a front windshield of an open top car.
[Fig. 10] Fig. 10 is a view schematically illustrating airflow into an open space as a comparative example.

### [Modes for Carrying Out the Invention]

A detailed description will hereinafter be made on a preferred embodiment of the present invention with reference to the accompanying drawings.

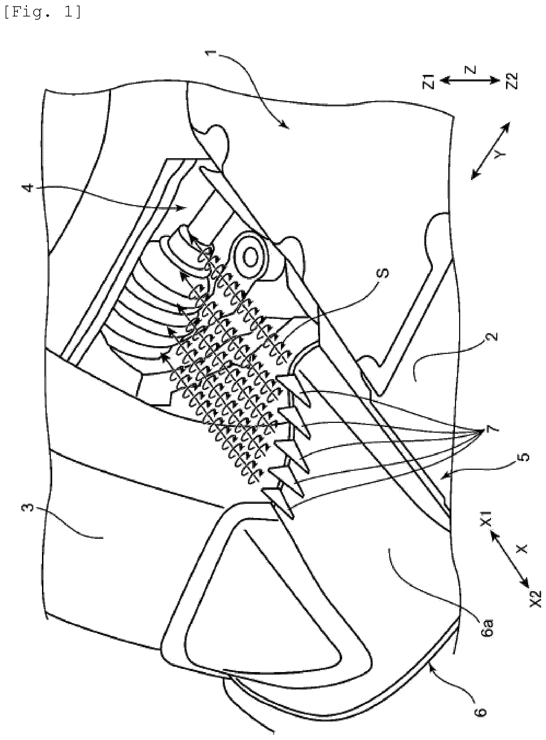

An airflow deflector 5 for a vehicle 1, which is illustrated in Fig. 1, is arranged in a vehicle front side X2 of a wheel house 4. The wheel house 4 is an open space that is provided on a floor surface 2, as an exterior surface of the vehicle 1, on a lower side of the vehicle 1.

Fig. 1 illustrates a state where the vehicle 1 is arranged upside down and the floor surface 2 faces upward. That is, in Fig. 1, a downward direction Z1 of the vehicle 1 is directed upward in Fig. 1, and an upward direction Z2 is directed downward in Fig. 1. The wheel house 4 accommodates a tire 3 and various components (a wheel, an axle, and the like) coupled to the tire 3.

More specifically, the airflow deflector 5 includes: a cover member 6 that covers at least a part of the floor surface 2 on the vehicle front side X2 of the wheel house 4; and at least one (five in Fig. 1) airflow deflector member 7 provided in a portion on a vehicle rear side X1 of the cover member 6. The airflow deflector members 7 in Fig. 1 separate from each other and are arranged at equally-spaced intervals in a vehicle width direction Y. The cover member 6 and the plural airflow deflector members 7 are integrally formed of a resin.

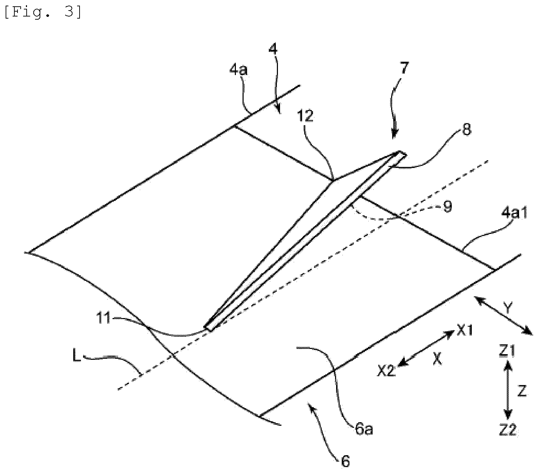

An end portion on the vehicle rear side X1 of the cover member 6 is arranged at a position that corresponds to an edge 4a1 (see Fig. 3) on the vehicle front side X2 of an opening 4a of the wheel house 4. In this way, the cover member 6 can cover a portion of the floor surface 2 that is next to the wheel house 4 on the vehicle front side X2.

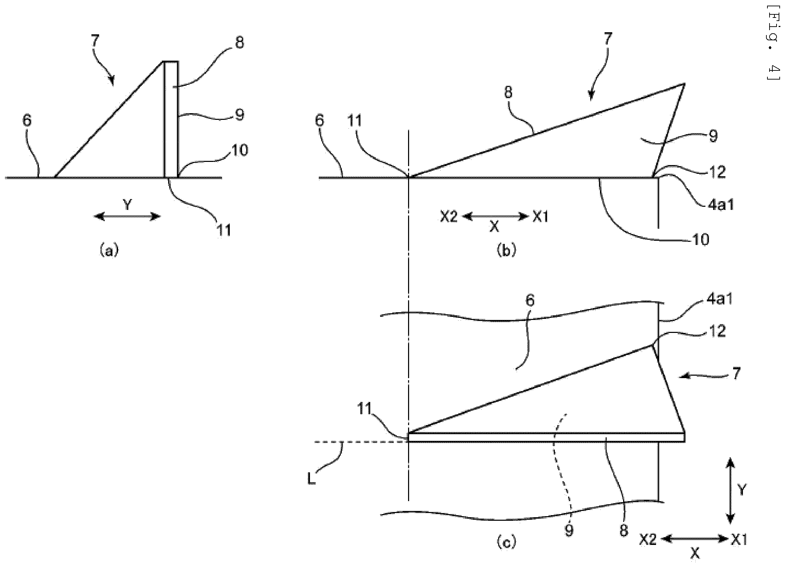

As illustrated in Fig. 3 and Figs. 4(b), (c), the airflow deflector member 7 is provided at a position on the vehicle rearmost side X1 of the cover member 6, that is, a position where an angled portion 12 on the vehicle rear side X1 of the airflow deflector member 7 corresponds to the edge 4a1 on the vehicle front side X2 of the opening 4a of the wheel house 4.

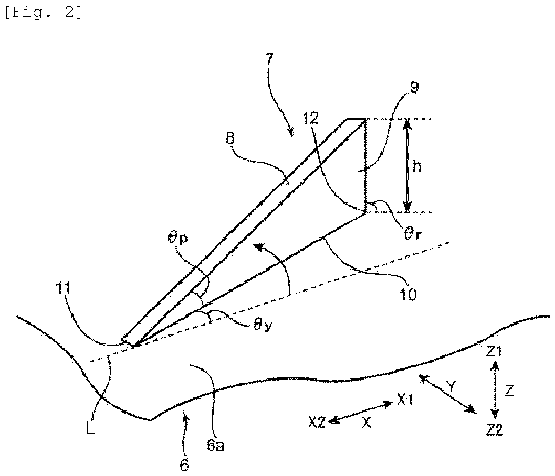

More specifically, as illustrated in Fig. 2 to Fig. 4, the airflow deflector member 7 has: a slanted section 8 as a hypotenuse; and an airflow deflector surface 9 that extends in a vertical direction Z of the vehicle 1 from the slanted section 8 toward a surface 6a of the cover member 6.

In this embodiment, the airflow deflector member 7 has a right-angled triangular shape in which a pointed corner 11 faces the vehicle front side X2. However, the present invention is not limited thereto, and the airflow deflector member 7 only needs to have a shape that has the slanted section 8 and the airflow deflector surface 9.

The slanted section 8 is slanted in a manner to extend to a vehicle lower side Z1 as extending to the vehicle rear side X1.

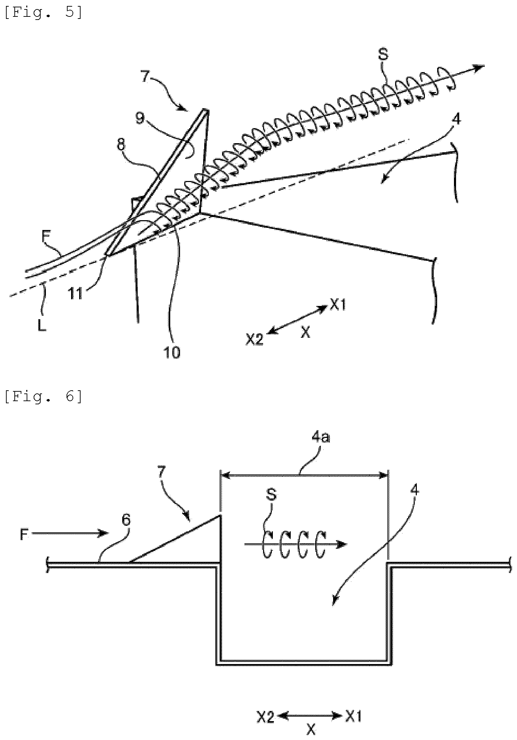

A thickness of the airflow deflector member 7, that is, a thickness of the slanted section 8 is preferably small. In such a case, air that flows from the vehicle front side X2 can be stabilized and produce a swirl S (see Fig. 5) when flowing over the slanted section 8.

A side 10 of the airflow deflector surface 9 serves as a boundary between the airflow deflector surface 9 and the surface 6a of the cover member 6, and an extending direction of the side 10 is oriented inward (that is, a side facing a center position in the vehicle width direction Y) or outward in the vehicle width direction Y with a vehicle longitudinal direction X being a reference. More specifically, as illustrated in Fig. 2, a straight line L that extends in the vehicle longitudinal direction X and passes the corner 11 of the airflow deflector member 7 is considered. In such a case, the side 10 is in a state of being slanted inward or outward in the vehicle width direction Y with respect to the straight line L, that is, in a state of being slanted at a specified slant angle (yaw angle) θy with respect to the straight line L.

In addition, the airflow deflector surface 9 is tilted inward or outward in the vehicle width direction Y with respect to the surface 6a of the cover member 6. More specifically, as illustrated in Fig. 2, the airflow deflector surface 9 is in a state of being tilted inward or outward in the vehicle width direction Y with respect to the surface 6a of the cover member 6 with the side 10 being a rotation axis, that is, in a state of being tilted at a specified slant angle (roll angle) θr with respect to the surface 6a.

During travel of the vehicle, airflow F (see Fig. 6) moves along a surface of the cover member 6 toward the vehicle rear side X1 at a position below the floor surface 2. As illustrated in Fig. 5, this airflow F moves in parallel with the straight line L with respect to the airflow deflector member 7, which is illustrated in Figs. 2 to 4, hits the airflow deflector member 7 from the vehicle front side X2, and produces the swirl at the time of moving over the slanted section 8. In addition, the airflow deflector surface 9 deflects the swirl into a spindly and continuous fashion. In this way, the spindly swirl S, which is illustrated in Fig. 1 and Figs. 5 to 6, toward the vehicle rear side X1 can be produced. This swirl S toward the vehicle rear side X1 guides surrounding air in a manner to longitudinally cross the opening 4a of the wheel house 4 in the vehicle longitudinal direction X, and thereby prevents airflow into the wheel house 4.

In particular, as illustrated in Fig. 1, the plural spindly swirls S, which are produced by the plural airflow deflector members 7, stretch in a manner to cover the entire wheel house 4, and thus can reliably prevent the airflow into the wheel house 4.

Here, as illustrated in Fig. 2, the swirl S can be produced when a slant angle (pitch angle) θp of the slanted section 8 with respect to the surface 6a of the cover member 6 is larger than 0 degree and equal to or smaller than 60 degrees. However, the high-speed stable swirl can be produced when the slant angle θp is approximately 30 degrees.

In addition, the swirl S can be produced when the slant angle (yaw angle) θy of the side 10 with respect to the straight line L is larger than 0 degree and equal to or smaller than 60 degrees. However, the high-speed stable swirl S can be produced when the slant angle θy is approximately 30 degrees.

The swirl S can be produced when the slant angle (roll angle) θr of the airflow deflector surface 9 with respect to the surface 6a is larger than 0 degree and equal to or smaller than 30 degrees. However, the high-speed stable swirl S can be produced when the slant angle θr is approximately 15 degrees .

A height h of the airflow deflector member 7 only needs to be set to such a height that the spindly swirl S capable of longitudinally crossing at least a part of (preferably a whole of) the opening 4a of the wheel house 4 can be produced. For example, the height h is set to approximately 2 to 8 mm.

As illustrated in Fig. 3 and Fig. 4 (c), in the case where the slanted section 8 is set to stretch toward the wheel house 4 (particularly, see the opening 4a thereof) in the vehicle longitudinal direction X in bottom view that is seen from the vehicle lower side Z1 in Fig. 3, the swirl S, which is produced at the time when the airflow F moves over the slanted section 8 as illustrated in Fig. 5, moves toward the vehicle longitudinal direction X. Thus, such a slanted section 8 is preferred.

For example, in the case where the slant angle (yaw angle) θy of the side 10 with respect to the straight line L is 30 degrees and the slant angle (roll angle) θr of the airflow deflector surface 9 with respect to the surface 6a is 15 degrees, the slanted section 8 can be set to stretch toward the wheel house 4 in the vehicle longitudinal direction X in the bottom view. In this case, the high-speed spindly swirl S can be produced.

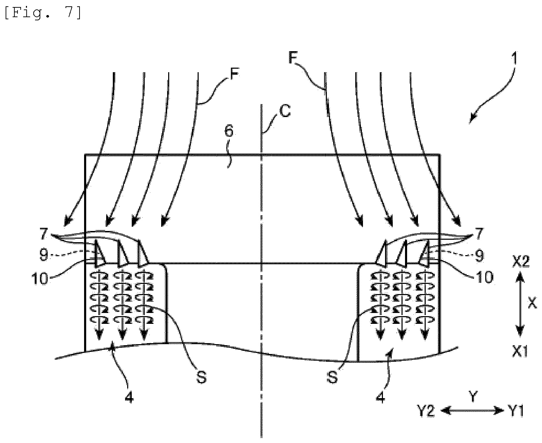

As illustrated in Fig. 7, the arrangement of the plural airflow deflector members 7 is preferably set in consideration of a fact that the airflow F from the vehicle front side X2 diverges to different flows on a right side and a left side of a center position C in the vehicle width direction Y (more specifically, flows in the different directions that separate to the right and left of the vehicle 1), for example. More specifically, the plural airflow deflector members 7 are provided on the cover member 6, and the plural airflow deflector members 7 are preferably arranged such that the extending directions of the sides 10 of the airflow deflector surfaces 9 and the tilt directions of the airflow deflector surfaces 9 with respect to the cover member 6 are bilaterally symmetrical about the center position C in the vehicle width direction Y of the vehicle 1. As an example of such arrangement of the airflow deflector members 7, as illustrated in Fig. 7, the airflow deflector members 7 arranged on the left side of the center position C only need to be tilted such that the extending directions of the sides 10 of the airflow deflector surfaces 9 and the tilt directions of the airflow deflector surfaces 9 with respect to the cover member 6 are oriented to a left side Y2 in the vehicle width direction. Meanwhile, the airflow deflector members 7 arranged on the right side of the center position C in Fig. 7 only need to be tilted such that the extending directions of the sides 10 of the airflow deflector surfaces 9 and the tilt directions of the airflow deflector surfaces 9 with respect to the cover member 6 are oriented to a right side Y1 in the vehicle width direction. In this case, magnitudes of the swirls S, which are produced by the plural airflow deflector members 7, can be adjusted to be bilaterally even. Alternatively, in the case where an airflow rate differs between the right side and the left side of the center position C in the vehicle width direction Y at the position below the floor surface 2, the airflow deflector members 7 are arranged such that the number thereof differs between the right side and the left side of the center position C. Also, in this case, the magnitudes of the swirls S, which are produced by the plural airflow deflector members 7, can be adjusted to be bilaterally even.

It should be noted that the at least one airflow deflector member 7 needs to be provided. In the case where the open space in the exterior surface of the vehicle 1 is small, the swirl S produced by the single airflow deflector member 7 can prevent the airflow into the open space.

### (Characteristics of This Embodiment)

### (1)

The airflow deflector 5 for the vehicle 1 in this embodiment is provided on the floor surface 2 of the vehicle 1 and is configured to deflect the airflow in the vehicle longitudinal direction X below the floor surface 2.

More specifically, the airflow deflector 5 includes: the cover member 6 that covers at least the part of the floor surface 2 on the vehicle front side X2 of the wheel house 4 on the floor surface 2; and the at least one airflow deflector member 7 that is provided in the portion on the vehicle rear side X1 of the cover member 6. The airflow deflector member 7 has: the slanted section 8 that is slanted in the manner to extend to the vehicle lower side Z1 as extending to the vehicle rear side X1; and the airflow deflector surface 9 that extends in the vehicle vertical direction Z from the slanted section 8 toward the cover member 6.

The extending direction of the side 10 of the airflow deflector surface 9, which serves as the boundary between the airflow deflector surface 9 and the surface 6a of the cover member 6 is oriented inward or outward in the vehicle width direction Y with the vehicle longitudinal direction X being the reference. The airflow deflector surface 9 is tilted inward or outward in the vehicle width direction Y with respect to the surface 6a of the cover member 6.

In the configuration of the airflow deflector 5 in the above embodiment, during the travel of the vehicle 1, the airflow toward the vehicle rear side X1 at the position below the floor surface 2 hits the airflow deflector member 7 from the vehicle front side X2 and produces the swirl at the time of moving over the slanted section 8 (see Fig. 5), and the airflow deflector surface 9 deflects the swirl into the spindly and continuous fashion. In this way, the spindly swirl S (see Fig. 1 and Figs. 5 to 6) toward the vehicle rear side X1 can be produced below the floor surface 2. Such a spindly swirl S moves in circles at a high speed. Thus, the spindly swirl S moves rectilinearly in comparison with normal airflow. This swirl S, which moves in circles at the high speed toward the vehicle rear side X1, guides the surrounding air in the manner to longitudinally cross the opening 4a of the wheel house 4 (see Fig. 6) in the vehicle longitudinal direction X. In this way, it is possible to prevent the airflow into the wheel house 4 on the vehicle rear side X1 of the cover member 6. As a result, it is possible to suppress aerodynamic drag caused by the airflow into the wheel house 4.

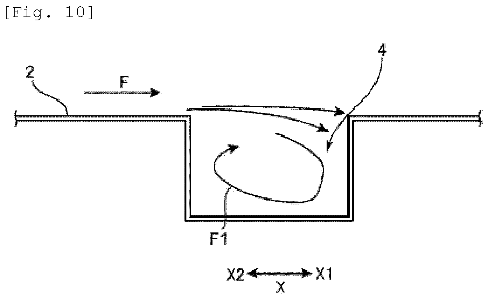

Here, as a comparative example, a case where the airflow deflector 5 in the above embodiment is not provided, that is, as illustrated in Fig. 10, a case where only the floor surface 2 is provided on the vehicle front side X2 of the wheel house 4 is considered. It is understood that, in the case of this comparative example, during the travel of the vehicle, the airflow F from the vehicle front side X2 partially becomes airflow F1 into the wheel house 4, which increases the aerodynamic drag. It is understood by observing Fig. 10 that the airflow deflector 5 in this embodiment produces the swirl S illustrated in Fig. 5 to prevent the airflow into the wheel house 4 and thereby contributes to an effect of suppressing the aerodynamic drag.

### (2)

In the airflow deflector 5 for the vehicle 1 in this embodiment, as illustrated in Fig. 3 and Fig. 4(c), the slanted section 8 extends in the vehicle longitudinal direction X toward the wheel house 4 in the bottom view (that is, when seen in the downward direction Z1 of the vehicle 1).

In such a configuration, the swirl S, which is produced at the time when the air moves over the slanted section 8, moves in the vehicle longitudinal direction X, and the airflow from the front side of the vehicle can move linearly with the swirl S in the vehicle longitudinal direction X toward the wheel house 4. As a result, it is possible to further improve the effect of suppressing the aerodynamic drag caused by the airflow into the wheel house 4.

### (3)

In the airflow deflector 5 for the vehicle 1 in this embodiment, as illustrated in Fig. 7, the plural airflow deflector members 7 are provided on the cover member 6, and the plural airflow deflector members 7 are preferably arranged such that the extending directions of the sides 10 of the airflow deflector surfaces 9 and the tilt directions of the airflow deflector surfaces 9 with respect to the cover member 6 are bilaterally symmetrical about the center position C in the vehicle width direction Y of the vehicle 1. More specifically, the plural airflow deflector members 7 in Fig. 7 are arranged such that the extending directions of the sides 10 of the airflow deflector surfaces 9 and the tilt directions of the airflow deflector surfaces 9 with respect to the cover member 6 are oriented in the bilaterally symmetrical fashion, that is, oriented oppositely from each other with respect to the center position C.

In such a configuration, the plural airflow deflector members 7, which are arranged such that the extending directions of the sides 10 of the airflow deflector surfaces 9 and the tilt directions of the airflow deflector surfaces 9 with respect to the cover member 6 are bilaterally symmetrical about the center position C in the vehicle width direction Y of the vehicle 1, produce the swirls S by the airflow F, which is directed differently between the right side and the left side of the center position C in the vehicle width direction Y at the position below the floor surface 2, and adjust the magnitudes of the swirls S to be bilaterally even. In this way, it is possible to prevent the swirl S in the small magnitude from being produced. As a result, it is possible to reliably prevent the airflow into the wheel house 4 and further improve the effect of suppressing the aerodynamic drag caused by the airflow into the wheel house 4.

### (4)

In the airflow deflector 5 for the vehicle 1 in this embodiment, in the bottom view of the vehicle 1, the slant angle θy of the side 10 of the airflow deflector member 7 with respect to the vehicle longitudinal direction X is preferably set to be larger than 0 degree and equal to or smaller than 30 degrees (more preferably approximately 30 degrees).

In such a configuration, it is possible to produce the stable high-speed swirl by the airflow deflector member 7 and to maintain a flow rate of such a swirl.

### (Modified Embodiments)

### (A)

As illustrated in Fig. 1, the example in which the airflow deflector 5 in the above embodiment is arranged on the vehicle front side X2 of the wheel house 4 as the open space provided to the floor surface 2 of the vehicle 1 has been described. However, the present invention is not limited thereto.

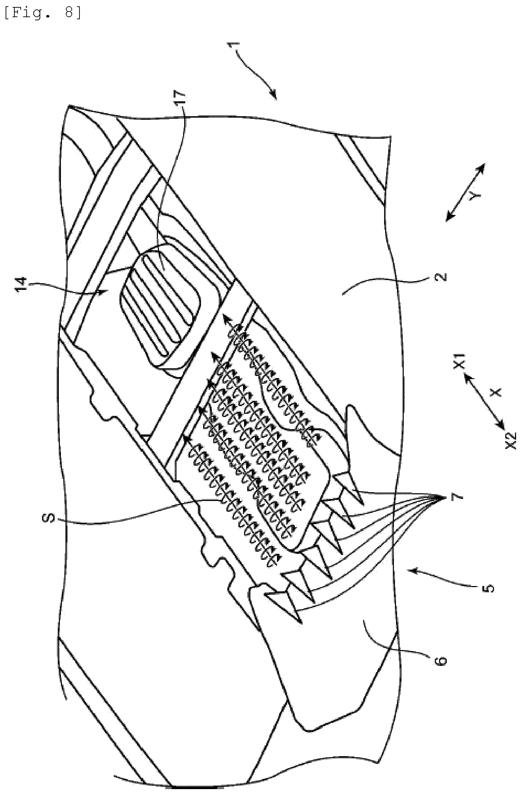

As a modified embodiment of the present invention, as illustrated in Fig. 8, the airflow deflector 5 may be provided on the vehicle front side X2 of a tunnel cover section 14 in another open space that is provided to the floor surface 2 and accommodates an exhaust unit 17 and the like. Also, in such a case, the cover member 6 of the airflow deflector 5 only needs to cover the floor surface 2 on the vehicle front side X2 of the tunnel cover section 14, and the plural airflow deflector members 7 only need to be provided in the portion on the vehicle rear side X1 of the cover member 6.

Also, in the case of the modified embodiment illustrated in Fig. 8, the plural spindly swirls S, which are produced by the plural airflow deflector members 7 of the airflow deflector 5, guide the surrounding air to longitudinally cross an opening of the tunnel cover section 14 in the vehicle longitudinal direction X. In this way, it is possible to prevent airflow into the tunnel cover section 14. As a result, it is possible to suppress the aerodynamic drag caused by the airflow into the tunnel cover section 14.

### (B)

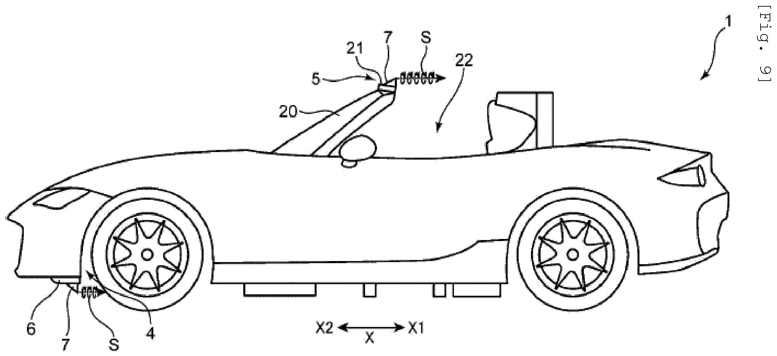

In addition, the present invention is not limited to the case where the airflow deflector 5 is arranged on the vehicle front side X2 of the open space provided to the floor surface 2 of the vehicle 1 as in the above embodiment and the modified embodiment (A). As further another embodiment of the present invention, as illustrated in Fig. 9, in the case where an open space 22 is provided on the vehicle rear side X1 of a front windshield 20 in an upper portion of the vehicle 1 as in the open top car, in addition to installing the airflow deflector 5 on the vehicle front side X2 of the wheel house 4 as in the above embodiment, the airflow deflector 5 may be arranged in the upper portion of the vehicle 1 in order to prevent the airflow into the open space 22.

That is, the airflow deflector 5 in the modified embodiment illustrated in Fig. 9 is provided on top of the front windshield 20 of the vehicle 1 and deflects the airflow in the vehicle longitudinal direction X above the front windshield 20. The airflow deflector 5 includes: an exterior member 21 such as a garnish provided at an upper end of the front windshield 20; and the at least one airflow deflector member 7 provided in a portion on the vehicle rear side X1 of the exterior member 21. The configuration of the airflow deflector member 7 is basically the same as the configuration illustrated in Figs. 2 to 5 while differing from that illustrated in Figs. 2 to 5 in a point that the airflow deflector member 7 is provided on the exterior member 21 in a manner to face upward instead of being provided on the cover member 6 in the manner to face downward. That is, the airflow deflector member 7 illustrated in Fig. 9 is configured to be provided to the exterior member 21 in a manner that the airflow deflector member 7 illustrated in Figs. 2 to 5 is vertically inverted and faces upward. More specifically, the airflow deflector member 7 has: the slanted section 8 (see Figs. 2 to 5) that is slanted to the upper side of the vehicle as extending to the vehicle rear side X1; and the airflow deflector surface 9 (see Figs. 2 to 5) that extends in the vehicle vertical direction Z from the slanted section 8 toward the exterior member 21. The extending direction of the side 10 of the airflow deflector surface 9, which serves as a boundary between the airflow deflector surface 9 and a surface of the exterior member 21, is oriented inward or outward in the vehicle width direction Y with the vehicle longitudinal direction X being the reference. The airflow deflector surface 9 is tilted inward or outward in the vehicle width direction Y with respect to the surface of the exterior member 21.

In the modified embodiment illustrated in Fig. 9, during the travel of the vehicle, the airflow toward the vehicle rear side X1 at a position above the front windshield 20 hits the airflow deflector member 7, which is provided to the exterior member 21, from the vehicle front side X2 and produces the swirl S at the time of moving over the slanted section 8, and the airflow deflector surface 9 deflects the swirl S into the spindly and continuous fashion. In this way, the spindly swirl S toward the vehicle rear side X1 can be produced above the front windshield 20. This swirl S toward the vehicle rear side X1 guides the surrounding air in the manner to longitudinally cross the opening of the open space 22 behind the front windshield 20 in the vehicle longitudinal direction X. In this way, it is possible to prevent the airflow into the open space 22 on the vehicle rear side X1 of the exterior member 21. As a result, it is also possible to suppress the aerodynamic drag caused by the airflow into the open space 22 behind the front windshield 20.

### [Description of Reference Signs and Numerals]

- 1: vehicle
- 2: floor surface
- 4: wheel house (open space)
- 5: airflow deflector
- 6: cover member
- 7: airflow deflector member
- 8: slanted section
- 9: airflow deflector surface
- 10: side
- 14: tunnel cover section (open space)
- 20: front windshield
- 21: exterior member

## Claims

1. An airflow deflector (5) to be provided on a floor surface (2) of a vehicle (1) and configured to deflect airflow in a vehicle longitudinal direction below the floor surface (2), the airflow deflector (5) for the vehicle (1) comprising:
a cover member (6) that covers at least a part of the floor surface (2) on a vehicle front side of an open space (4a) provided to the floor surface (2); and
at least one airflow deflector member (7) that is provided in a portion on a vehicle rear side of the cover member (6), wherein
the airflow deflector member (7) has:
a slanted section (8) that is slanted to a vehicle lower side as extending to a vehicle rear side; and
an airflow deflector surface (9) that extends in a vehicle vertical direction from the slanted section (8) toward the cover member (6),
an extending direction of a side (10) of the airflow deflector surface (9), which serves as a boundary between the airflow deflector surface (9) and a surface (6a) of the cover member (6), is oriented inward or outward in a vehicle width direction with the vehicle longitudinal direction (L) being a reference, and
the airflow deflector surface (9) is tilted inward or outward in the vehicle width direction with respect to the surface (6a) of the cover member (6).

2. The airflow deflector (5) for the vehicle (1) according to claim 1, wherein
the slanted section (8) extends in the vehicle longitudinal direction toward the open space (4a) in bottom view.

3. The airflow deflector (5) for the vehicle (1) according to claim 1 or 2, wherein
the plural airflow deflector members (7) are provided on the cover member (6), and the plural airflow deflector members (7) are arranged on both of right and left sides of a center position (C) in the vehicle width direction of the vehicle (1), and
the plural airflow deflector members (7) are arranged such that the extending directions of the sides (10) of the airflow deflector surfaces (9) and tilt directions of the airflow deflector surfaces (9) with respect to the cover member (6) are bilaterally symmetrical about the center position (C) in the vehicle width direction.

4. The airflow deflector (5) for the vehicle (1) according to any one of claims 1 to 3, wherein
in the bottom view of the vehicle (1), a slant angle θy of the side (10) of the airflow deflector member (7) with respect to the vehicle longitudinal direction (L) is set to be larger than 0 degree and equal to or smaller than 30 degrees.

5. The airflow deflector (5) for the vehicle (1) according to claim 1, wherein
the slanted section (8) is slanted at an pitch angle θp with respect to the surface (6a) of the cover member (6), and wherein the value of said pitch angle θp is larger than 0 degree and smaller than 60 degrees, in particular approximately 30 degrees.

6. The airflow deflector (5) for the vehicle (1) according to any one of the preceding claims, wherein
the airflow detector surface (9) is tilted at a roll angle θr with respect to the surface 6a of the cover member (6) which is larger than 0 degree and equal to or smaller than 30 degrees, in particular approximately 15 degrees.

7. The airflow deflector (5) for the vehicle (1) according to any one of the preceding claims, wherein
the maximum height of the airflow deflector member (7) is set to approximately 2 mm to 8 mm.

8. The airflow deflector(5) for the vehicle (1) according to any one of the preceding claims, wherein
the cover member (6) and the plural airflow deflector members (7) are integrally formed of a resin.

9. The airflow deflector (5) for the vehicle (1) according to any one of the preceding claims, wherein
the at least one airflow deflector member (7) has a right-angled triangular shape in which a pointed corner (11) faces the vehicle front side and the slanted portion (8) forms the hypotenuse.

10. An airflow deflector (5) that is provided on top of a front windshield (20) of a vehicle (1) and deflects airflow in a vehicle longitudinal direction above the front windshield (20), the airflow deflector (5) for the vehicle (1) comprising:
an exterior member (21) that is provided at an upper end of the front windshield (20); and
at least one airflow deflector member (7) that is provided in a portion on a vehicle rear side of the exterior member (21), wherein
the airflow deflector member (7) has:
a slanted section (8) that is slanted to a vehicle upper side as extending to a vehicle rear side;
an airflow deflector surface (9) that extends in a vehicle vertical direction from the slanted section (8) toward the exterior member (21),
an extending direction of a side (10) of the airflow deflector surface (9), which serves as a boundary between the airflow deflector surface (9) and a surface of the exterior member (21), is oriented inward or outward in a vehicle width direction with the vehicle longitudinal direction being a reference, and
the airflow deflector surface (9) is tilted inward or outward in the vehicle width direction with respect to the surface of the exterior member (21).

11. A vehicle (1) comprising at least one airflow deflector (5) according to any of claims 1 to 4 and/or claim 5.

12. The vehicle (1) according to claim 11 wherein the open space is a wheel house or a tunnel cover section.
